# EUROPEAN PATENT APPLICATION

(11) **EP 4 553 462 A1**
(43) Date of publication of application: **14.05.2025**
(21) Application number: 23209509.1
(22) Date of filing: 13.11.2023
(51) Int. Cl.: G01H 1/00, F03D 17/00

(54) **GENERATOR WEDGE EJECTION DETECTION BY VIBRATIONS**

(71) Applicant: Ørsted Wind Power A/S, 7000 Fredericia Skaerbaek (DK)
(72) Inventor: MATHIASEN, Mathias Bækdal, 2820 Gentofte (DK); HOUGAARD, Hans Agger, 2820 Gentofte (DK)
(74) Representative: Lewis Silkin LLP

(57) **Abstract**

A method and system for early fault detection in a wind turbine generator (7) is provided. A vibration signal of noise produced by the generator is received. A periodic signal component related to the number of rotor bars of a rotor (11) of the generator (7) is identified in the vibration signal, and a potential fault in the stator of the generator is identified based at least in part on a change in characteristic of the periodic signal component over time.

## Description

The present invention concerns a method and system for early fault detection in a wind turbine generator and, in particular, a method and system for identifying the early stages of stator wedge failure for triggering preemptive maintenance.

In this application, the term "wind turbine generator" is used to refer to the electrical generator itself, whereas the term "wind turbine" is used to refer to the whole wind turbine assembly, including the tower, blades, nacelle and the generator. Nevertheless, in the art, the terms "wind turbine generator" and "wind turbine" are sometimes used interchangeably depending on the context.

Wind turbines present a unique set of issues in terms of maintenance and repair. In particular, they are typically located offshore or in otherwise remote locations, and the generator is housed in an elevated position within a nacelle on top of a tower making access difficult. As such, maintenance and repair operations are expensive and hazardous, and require specialist offshore vessels and equipment. At the same time, wind turbine generators are also uniquely prone to failure. That is, other electric generator applications are typically operated in a relatively steady state and within relatively controlled environmental conditions. This provides for some level of predictability in terms of operating wear and, in turn, allows servicing intervals to be scheduled to identify defects before they lead to catastrophic failure. In contrast, wind turbine generators are subjected to huge variations in load as wind speeds and directions change, as well as large variations in thermal stresses with changing weather conditions. As such, these variations often accelerate certain failure modes in ways that are difficult to predict, meaning that it is very challenging to pre-empt issues with regular servicing. Accordingly, not only is wind turbine generator servicing more expensive and challenging, but it is also much more difficult to predict when servicing is needed.

Furthermore, when wind turbine generators do fail, undertaking repair operations are also extremely expensive, especially offshore due to the costs associated with the service vessels. Firstly, as failure often occurs unexpectedly, it can take time to arrange for a repair crew to reach the site to perform the necessary repairs. Moreover, until the repair crew is on site, they won't necessarily know what parts are needed for the repair. As such, the generator down times can be significant. Catastrophic failure in the generator can also lead to damage to other parts of the wind turbine assembly. Again, because of the unique difficulties and hazards of accessing the site, these repairs can be much more challenging than they would in other generator applications.

A particular type of wind turbine generator failure is the ejection of a stator wedge. A precursor to this type of failure is the loosening of the wedge which results in an irregular induced stator current. Accordingly, some solutions have proposed using a current sensor for monitoring for the presence of irregular induced stator current in order to provide fault detection. However, a challenge with using current monitoring commercially is that monitoring systems typically provided in wind turbine generators do not usually include current sensors or current sensors having sufficient sensitivity to identify a potential fault. Whilst sensor systems for future wind turbine installations could be designed to incorporate suitable current sensors, it's often advantageous for power providers to adopt consistent fault monitoring protocols across all their sites. Given that the operating live span of an offshore windfarm is often more than 20 years, this raises a significant issue in terms of how to identify faults in existing wind turbine installations. For example, the retrofitting of current sensors to existing wind turbine installations is costly and logistically difficult. In particular, access is challenging as it would normally require specialist service crew to manage the transition from a sea-vessel to a static platform. Furthermore, a specially trained engineer would normally be needed to access power systems due to the very high operating voltage of the generator. That is, the installation work would require both shutdown of the generator and specialist engineering expertise to install the sensor in a manner which did not risk future high voltage hazards. Accordingly, given the large number of existing wind turbine sites, the above challenges mean that retrofit solutions are often too expensive to be commercially practical.

The present invention therefore seeks to address the above issues.

According to a first aspect of the present invention, there is provided a method of early fault detection in a wind turbine generator, the method comprising receiving a vibration signal produced by the generator, identifying in the vibration signal a periodic signal component related to the number of rotor bars of a rotor of the generator, and identifying a potential fault in the stator of the generator based at least in part on a change of the periodic signal component over time.

The inventors have discovered that when a stator wedge starts to become damaged and loosen, a small vibration is caused by the induction of a magnetic field as each rotor bar within the generator's rotor passes over it. This vibration presents as a periodic signal component in the generator's operational noise and is a function of the number of rotor bars and the current speed of the rotor. Accordingly, the inventors have discovered that, by identifying the presence of the periodic signal in the noise spectrum produced by the generator, a potential fault may be identified in the stator of the generator. For example, an increase in the magnitude of the periodic component over time may be used to indicate a developing fault arising from degradation in a part of the generator stator. A particular benefit of the claimed solution is that it has been found that the vibration and other acoustic data recorded by microphones/accelerometers already provided in existing wind turbine generators to detect bearing failures includes the periodic component. That is, for many years, wind turbine generators have been fitted with microphones, and other types of vibration sensors, to listen for mechanical bearing noises arising from degradation of the bearings supporting the rotor shaft. Data of this generator noise has typically been logged over time to allow for post-failure analysis. What has been discovered is that these noise spectrums recorded using existing equipment may now be processed to identify the presence of the periodic component arising from wedge degradation, and monitor how the magnitude of this component increases over time. This means that not only can wedge degradation be monitored using existing acoustic sensors without additional sensor retrofitting, but we also have significant volumes of historical acoustic data from existing wind turbine generators which can be processed using the new method for comparison and training.

Accordingly, deterioration of a stator wedge may be identified based on the detection of a periodic signal component in the noise created by the generator in operation when the wedge becomes loose and before it is ejected. Once a wedge has been ejected, the underlying winding is left unsupported, which could then lead to winding damage, flashover, and generator failure. As such, embodiments of the present invention allow for early identification of wedge loosening so that a maintenance operation may be pre-emptively triggered. Importantly, the generator does not need to be taken out of service; monitoring may take place while the generator is running. Additionally, no additional sensor equipment is required to be fitted to the generator to carry out the monitoring. Furthermore, the generator may remain running until a servicing crew is able to undertake maintenance. As such, operating downtime may be minimised. This contrasts with conventional wedge testing methods which would involve the generator first being taken out of service and then the tightness of each individual wedge being manually tested, typically by applying a hammer impact and analysing the acoustic feedback. In practice, such conventional wedge testing methods are therefore simply not practical in the context of a wind turbine.

In embodiments, the change in characteristic comprises an increase in the amplitude of the periodic signal component. In this way, detection of the potential fault can be identified by determining that an element of the generator stator is progressively deteriorating. As, for instance, a stator wedge wears further and becomes loosened in the stator, the variations in magnetic flux between the bars of the rotor and the stator wedge increases, further increasing the vibrational noise being generated and indicating the development of a potential fault. This therefore increases the amplitude of the periodic signal component.

In embodiments, the change in characteristic comprises the amplitude of the periodic signal reaching a threshold amplitude. In this way, a potential stator fault can be determined simply. The threshold may be adjusted based on preferences and/or historical performance data. It may therefore be set such that it indicates the wedge has reached a point where maintenance or repair may be necessary, but before there is a risk of a complete part failure. For cost and operational reasons, it may only be necessary to repair a stator fault when the fault reaches a certain level. Further, some periodic signals may be present in the vibration signal received by a vibration sensor, such as an audio sensor or accelerometer, at the generator which does not indicate a fault until it reaches a certain threshold.

In alternative embodiments, the change in characteristic comprises an increase in amplitude relative to other signal components in the vibration signal. In this way, changes in the sound generated by the characteristics of multiple periodic components changing relative to one another can be used to detect potential fault. For example, general noise levels of the vibration signal may vary over time normally due to, for instance, the age of the generator, or degradation of the accelerometer, and therefore relative changes in particular frequency components may be used to indicate the development of potential faults. For example, rotation of the rotor of the turbine may present other frequency components in the vibration signal, and these components may increase in amplitude as the generator ages. By comparing these increases with that of the specific periodic signal component, it may be determined whether a stator fault is developing.

In embodiments, the periodic signal component has a plurality of harmonic sub-components. The spinning of the rotor and the vibrations this induces may lead to further harmonic signals based on the periodic signal which may also be identified as indicative of a stator fault. These sub-components therefore may also be used to identify the potential stator fault.

In embodiments, identifying the periodic signal component comprises applying a frequency domain transform function to the vibration signal and identifying the periodic signal component within the transformed vibration signal. The use of a frequency transformation on the vibration signal allows for greater ease in identifying the periodic signal component, with the signal being present as a peak at the expected frequency of the periodic signal component.

According to a second aspect of the present invention, a system is provided for early fault detection for a wind turbine generator comprising a vibration sensor for receiving a vibration signal produced by the generator and an early fault detection module configured to identify in the vibration signal a periodic signal component related to the number of rotor bars of a rotor of the generator, and identifying a potential fault in the stator of the generator based at least in part on a change of the periodic signal component over time.

In this way, an apparatus for early fault detection within a wind turbine generator may be provided. As the wedges within the generator's stator assembly begin to loosen over time, the periodic signal component identified in the audible vibration signal may be monitored in realtime by the system using, for example, an accelerometer or other vibration sensor, and used to instigate preventative maintenance before failure. As such, the generator repairs may be scheduled to minimise operating downtime.

In embodiments, the change in characteristic comprises an increase in the amplitude of the periodic signal component. In this way, detection of the potential fault can be identified by determining that an element of the generator stator is deteriorating. As, for instance, a stator wedge wears further and becomes loosened in the stator, the magnetic flux between the bars of the rotor and the stator wedge increases, further increasing the vibrational noise of the potential fault. This therefore increases the amplitude of the periodic signal component.

In embodiments, the change in characteristic comprises the amplitude of the periodic signal reaching a threshold amplitude. In this way, it can be determined when the potential stator fault has reached a point where maintenance or repair may be necessary. For cost and operational reasons, it may only be necessary to repair a stator fault when the fault reaches a certain level. Further, some periodic signals may be present in the vibration signal received by a vibration sensor at the generator which does not indicate a fault until it reaches a certain threshold.

In alternative embodiments, the change in characteristic comprises an increase in amplitude relative to other periodic signal components in the vibration signal. In this way, it can be determined whether multiple periodic components in the vibration signal are increasing due to, for instance, the age of the generator, or degradation of a vibration sensor, or if the particular periodic component relative to the number of rotor bars is increasing or has increased at a greater rate. Due to the rotation of the rotor of the turbine, other components may be present in the vibration signal, and these components may increase in amplitude as the generator ages. By comparing the increase of the specific periodic signal component to the increase of all or some other components, it can be determined whether a stator fault is developing.

In embodiments, the periodic signal component has a plurality of harmonic sub-components. The spinning of the rotor and the vibrations this induces may lead to further harmonic signals based on the periodic signal which are also indicative of a stator fault. These sub-components therefore can also be used to identify the potential stator fault.

In embodiments, identifying the periodic signal component comprises applying a frequency domain transform function to the vibration signal and identifying the periodic signal component within the transformed vibration signal. The use of a frequency transformation on the vibration signal allows for greater ease in identifying the periodic signal component, as the signal will present a peak at the expected frequency of the periodic signal component.

In embodiments, the audio sensor may be mounted outside a housing of the generator. In this way, installation, maintenance and replacement of the vibration sensor may be simplified. In particular, access to the vibration sensor does not require access to the internal mechanism of the wind turbine generator.

According to a third aspect of the present invention, a sensor for an early fault detection system in a wind turbine generator is provided, comprising a receiver for receiving a vibration signal produced by the generator, and a processor configured to identify in the vibration signal a periodic signal component related to the number of rotor bars of a rotor of the generator, and identify a potential fault in the stator of the generator based at least in part on a change in characteristic of the periodic signal.

In embodiments, the sensor for an early fault detection system in a wind turbine may be mounted outside a housing of the generator.

In embodiments, the sensor may be configured to carry out any of the above method steps.

Illustrative embodiments of the present invention will now be described with reference to the accompanying drawings in which:
Figure 1 shows an offset sectioned view of a typical stator slot assembly within a generator;
Figure 2 shows an isometric view of a generator fitted with an early fault detection system or sensor of an illustrative embodiment of the invention;
Figure 3A shows an example of an early fault detection system according to an illustrative embodiment of an invention;
Figure 3B shows an example of an early fault detection sensor according to an illustrative embodiment of an invention;
Figure 4A shows a representation of a signal detected by the acoustic sensor of a wind turbine generator;
Figure 4B shows a second representation of a signal detected by the acoustic sensor of a wind turbine generator;
Figure 5 is a schematic graph showing a representation of how the generator's status deteriorates over a time period prior to a failure event.

Wind turbine electrical generators are particularly prone to failure. Machine forensics undertaken after failure indicate that the most common root causes stem from the mechanical stresses applied to components by the electromagnetic forces, static and cyclic loads, thermal loads and differential expansion forces generated during generator operation. A particularly common issue relates to the ejection of stator wedges and the subsequent failure of the associated stator slot assembly.

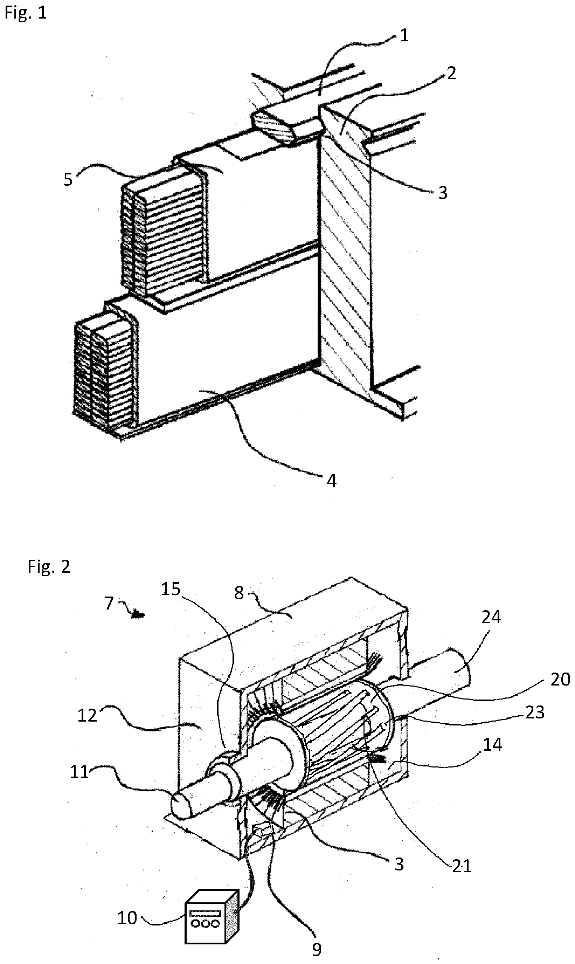

To explain the above in further detail, Figure 1 shows a typical stator slot assembly within a generator. The stator comprises a plurality of these slot assemblies in an annular arrangement surrounding the generator's rotor. Each slot 3 is defined in the stator core 2 and receives first and second stator windings 4 and 5, along with associated insulation and filler members. The stator windings 4 and 5 are held in place by stator wedge 1, which is keyed into corresponding formations provided in the stator core 3 at the top of each slot 3. The wedge 1 is formed of a ferromagnetic composite and acts to hold the stator winding in place and to reduce harmonics.

In use, the generator's rotor is situated in the nacelle of the wind turbine and is driven by the turbine's rotor blades, thereby inducing a current in the stator windings 4 and 5. Over time, the wedge 1 may begin to loosen due to the mechanical stresses applied. As this loosening progresses further, the deterioration of the wedge structure accelerates. As the current induced in the stator windings 4 and 5 is dependent on the magnetic flux induced between each bar of the rotor and the stator, and the magnetic flux in turn is dependent on the proximity of the coils to the rotor and size and location of the wedge, the current induced in a stator coil with a worn wedge will be different to that induced in a stator coil with a nonworn wedge.

This varying periodic change in induced current and magnetism results in a periodic vibration which manifests as a periodic noise signal component caused by the magnetic field. The present inventors have found that an acoustic sensor, such as an accelerometer or microphone, which are commonly provided in wind turbine generator housings to detect bearing wear, can also pick up this vibration as a periodic noise signal component within the general operating noise of the generator.

By analysing the vibration signal received at the acoustic sensor installed in the generator housing to identify frequency of the vibration caused by the magnetic field, a potential fault can be identified. In particular, the present inventors have found that a specifically identifiable vibration frequency is caused as a bar of the rotor of the generator passes by a damaged stator wedge for a given rotation speed. That is, the frequency of the signal is a function of the rotor's speed and the number of rotor bars.

In this respect, the vibration therefore consists of a vibrational noise with a period proportional to the number of rotor bars of the rotor and the speed of the rotor. For instance, for a rotor having 86 bars, the vibration pattern may consist of a vibrational noise which occurs 86 times per rotation. For a rotational speed of the turbine of 1500 revolutions per minute, the vibration pattern will consist of a vibrational noise which occurs 86 x 1500 times per minute, or 86 x 25 times per second, or at a frequency of 2150 Hertz.

However, it will be appreciated that the frequency of other periodic signal components may be related to the number of rotor bars of the rotor in another way. For instance, due to other frequency producing elements within the generator or within the vibration signal received, the frequency of the periodic signal component may be related to some integer multiple of the number of rotor bars of the rotor, for instance double or three times the expected frequency.

Further, other periodic sub-components may form part of the periodic signal component. The rotation of the rotor within the generator may cause nth order harmonics of the main frequency of the periodic signal component. For example, in the event that interference prevents identification of a main sub-component of the periodic signal component a different harmonic sub-component may be identified and used for fault detection instead.

Figure 2 shows a generator 7 fitted with an early fault detection system of a first illustrative embodiment of the invention. As shown in Figure 2, the generator 7 comprises a housing 8, having a body housing the rotor 11 and closed by two end plates. The drive rotor 11 protrudes through the drive end plate 12 at the front of the generator 7, with the rotor shaft 24 supported by bearing 15.

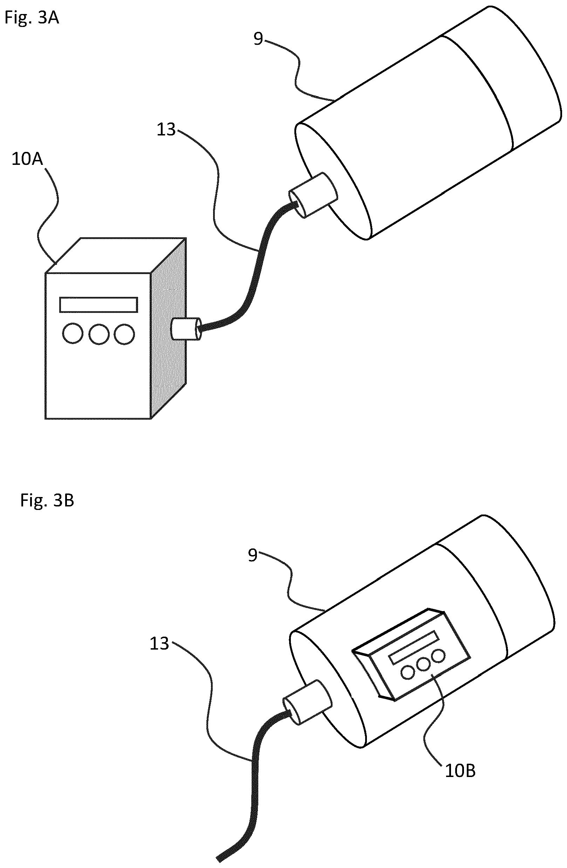

In this example, the vibration sensor 9, provided in the form of an accelerometer, is mounted inside 14 the generator housing 8. In other arrangements, the vibration sensor may be located outside of the generator housing 8, or be situated on the bearing 15, or be fitted to the housing to detect vibrations transmitted therethrough. Due to the nature of vibration signals, and that components of a vibration signal at an expected frequency can still be identified in a noisy environment, the vibration sensor 9 can be mounted outside of the generator housing 8. In Figure 2 the vibration sensor is shown connected to a processor 10. As discussed below with reference to Figures 3A and 3B, arrangements are also envisaged where a system is provided having a separate processor 10A and a sensor having an integrated processor 10B.

As illustrated in Figure 3A, the vibration sensor 9 may be connected to a processor 10A for interpreting the sensor signals. In this embodiment, connection between the vibration sensor 9 and the processor 10A is established through a wired connection 13, although it will be understood that wireless connections are also possible. For example, the vibration sensor 9 may be wirelessly connected to a gateway or router for transmitting signals to a remote processor 10A located, for example, onshore.

As illustrated in Figure 3B, in some embodiments, the vibration sensor 9 may also contain a processing element 10B which can analyse the vibration signals received at the vibration sensor 9 without the use of an external processor 10A. The sensor may still be connected, wirelessly or via wires 13 to a processor 10A which carries out further operations in connection with the vibration sensor 9, such as generating alerts or undertaking generator control.

In particular, a system for early fault detection may be employed which uses a sensor and a remote processor such as an early fault detection module 10A, or a sensor for early fault detection may be employed where the sensor may contain a processor 10B, or a combination of both system and sensor 9 may be employed.

Figure 2 further shows an isometric view of a rotor assembly for a wind turbine generator. Rotor 20 is formed from bars 21 connected at either end by shorting rings 22 and 23, which are supported on rotor shaft 24. In some examples of wind turbine generator rotors 86 bars 21 are provided, as also set out in the examples below. Each bar passes over each stator winding 4, 5 and thus over each stator wedge 1 inducing a magnetic field in the stator core 2 which in turn induces an opposing current in the stator windings 4, 5.

It will be appreciated that each bar 21 will pass over a damaged stator wedge 1 once per revolution, and as such a magnetic force is felt by the damaged stator wedge 1 N times per rotor revolution, where N is the number of rotor bars 21.

This leads to a vibration caused by the stator wedge 1 with a frequency of N times the speed of rotation of the rotor 20, because the missing wedge may apply insufficient force to balance the rotor.

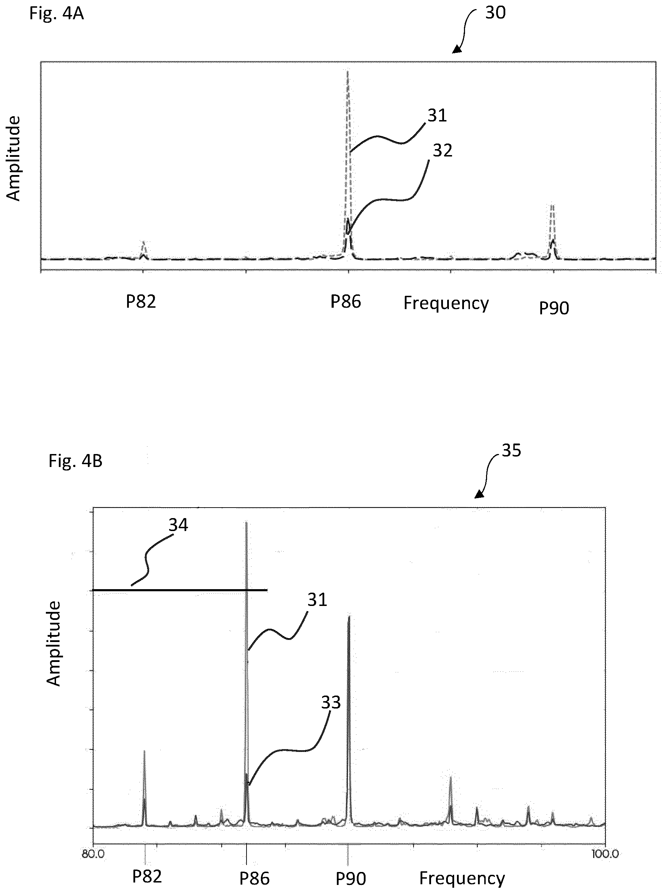

Figures 4A and 4B show a graphical representation of a sample of the noise signal characteristics derived from the vibration sensor output of the generator.

In particular, Figure 4A shows a chart 30 with a frequency domain representation of a first vibration signal 31 received at a vibration sensor of a generator which has a damaged stator wedge, and a second vibration signal 32 received at the generator before damage to the stator wedge was observed. Both vibration signals 31 and 32 show a peak at the point "P86" which has a higher amplitude than the surrounding frequencies, however the first vibration signal 31 has a much higher peak showing the periodic component of the signal associated with wedge vibrational noise increased at the vibration sensor. The peak occurs at point P86 because of the 86 rotor bars of the exemplary embodiment. That is, for each rotor revolution, each of the 86 rotor bars passes over the damaged stator wedge once, resulting in a vibration signal detectable at that P86 frequency. Naturally, for a generator with a different number of rotor bars, the P point will be different.

By monitoring the increase of the P86 peak over time, it will therefore be understood that damage at the stator wedge can be identified before the wedge is visibly damaged. The lower peak of the first generator 31 shows the periodic signal component before observed damage is identifiable and can be monitored to determine damage to a wedge increasing over time.

Figure 4B shows a chart 35 with a frequency domain representation of a first vibration signal 31 received at a vibration sensor of a generator 31 which has a damaged stator wedge, and a second vibration signal 33 which does not have a damaged stator wedge.

It can be seen in both 4A and 4B that in all generators there are frequency peaks at P86, the expected frequency of a stator fault signal component. However, for instance in 4A, the peak has increased at a much higher rate than the peak at P82. That is, P82 has roughly doubled whilst P86 has nearly tripled in magnitude. It can therefore be useful to monitor not just when an amplitude of the periodic signal component has increased, but whether the amplitude has increased relative to other periodic signal components in the vibration signal. For instance, when it is determined that the rate of change of P86 has reached a certain level higher than that of e.g. P82.

In addition, from Figure 4B it can be seen that the second vibration signal 32 associated with the healthy generator has a peak apparent at P86, however in first vibration signal 31 associated with the damaged generator, the P86 peak is much higher. Thus, a simple identification of a fault may be achieved by monitoring whether the peak of a periodic signal component indicative of a stator fault has increased above a threshold 34. An example threshold 34 is shown in Figure 4B, although it will be understood that the level of the threshold can be set wherever appropriate depending on the generator type, previous experience, and acceptable safety tolerances.

Both Figures 4A and 4B show frequency domain transformed vibration signals which are generated by applying a frequency domain transform function to the vibration signal received at the sensor. For instance, a fast Fourier transform (FFT) may be applied. There are known in the art other methods of identifying or analysing a periodic signal component of a vibration signal which do not rely on frequency domain transform functions. For example, in some embodiments, a machine learning model may be used to identify the development of periodic signal components associated with a potential fault. In such an instance, historically recorded vibration signals associated with failed generators may be used to train a neural network to identify the development of potential faults.

The peaks at P82 and P90 are also potential damage indicators and are the result of the influence of the number of generator pole pairs in the generator on the periodic signal component. In the exemplary embodiment there are 2 pole pairs, i.e, 4 poles. The variation of magnetic strength between the poles results in a magnetic field which alternates between north and south 4 times per revolution. This alternating magnetic field results in a frequency variation that multiplies onto other signal components. This manifests as further periodic signal components which appear at P86 +/- 4 (number of rotor bars) +/-(number of poles), i.e, P82 and P90. Because one sub-component of these periodic signal components is the P86 component which indicates a potential stator fault, these further periodic signal components can also be used to indicate a potential stator fault. As the P point P86 depends on the number of rotor bars, similarly the number +/- 4 depends on the number of poles.

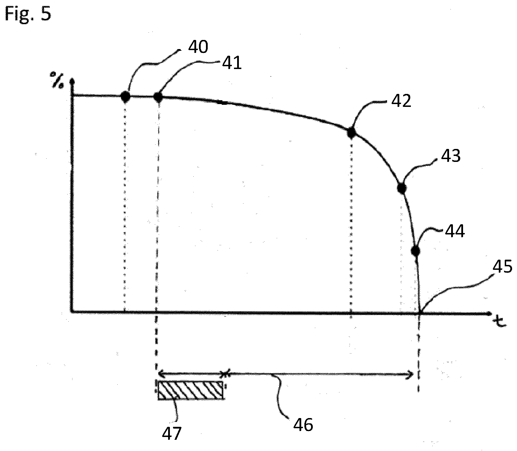

Figure 5 provides a representation of how a generator's status (y axis) deteriorates over a time period prior to a failure event (x axis). Point 40 indicates the start of when damage to the wedges begins. At point 41, the wedge damage has progressed to a sufficient extent that a periodic signal component can be identified in an vibration signal received at the vibration sensor installed at the generator 7 which identifies a potential fault. As this wear progresses, deterioration continues to point 42. From here, deterioration of the generator's status begins to accelerate more rapidly, with audible noise being produced at point 42, followed by heat at point 43, and smoke at point 44. Eventually, the generator will fail entirely at point 45.

In conventional wind turbine generator arrangements, routine maintenance will often be scheduled at intervals intended to try to identify wedge damage before it reaches the catastrophic failure stage 45. However, in the early stages at points 40-42, it can be difficult to identify potential problems. Furthermore, because the rate of deterioration increases rapidly, it can be hard to pre-empt and often an issue will only be identified after the generator has already failed.

With the disclosed early fault detection method, system and sensor, the vibration signal from the generator received by the vibration sensor can be monitored in real time. Specifically, the processor 10 may use the sensor 9 to identify the presence of a periodic signal component indicative of a potential stator fault from point 21 in Figure 5 onwards. The processor 10 may monitor the periodic signal component for identifying when the peak value of the periodic signal begins to increase, such as when a predetermined threshold is reached or when the peak value of the periodic signal component increases relative to other periodic signal components in the vibration signal received by the sensor by a predetermined amount. This may then initiate an alert to indicate that a potential fault has been identified. In embodiments, the processor 10 may automatically generate this early fault alert. In other embodiments, the processor 10 may provide a user with a measurement value or graphical representation for their manual interpretation.

Accordingly, embodiments of the present invention allow for early identification of wedge loosening so that a maintenance operation may be pre-emptively triggered. In preferred embodiments, the threshold is set so that the early warning is triggered during a pre-warning window 47 shown in Figure 5. This pre-warning window 47 is after point 41 where a periodic signal component indicative of the potential fault in the stator can be identified in the noise received at the vibration sensor, but significantly before 42 where degradation of the generator begins to accelerate. This allows early fault detection by a period corresponding to pre-warning time 46, which in practice may be around 3-6 months, and potentially up to 12 months in advance. As such, a maintenance operation can be scheduled to allow the main generator components to be exchanged before they deteriorate to the extent that they could fail.

Most wind turbines are constructed and installed with a vibration sensor built in for the detection of rotor shaft bearing damage and faults. Further, to monitor for bearing damage and patterns in bearing damage the vibration signal received at the vibration sensor is monitored and stored. This means that historical data may be generally available for the vibration profiles associated with a wind turbine. This can therefore be correlated with known wind turbine failures to detect patterns in the failures of stator wedges.

For instance, historical data can be used to identify periodic signal component characteristics in new turbines which led to failures in other rotors. As such, the periodic signal component indicative of a potential failure can be refined to provide a more robust estimate of a new generator failure, or an earlier estimate of a generator failure.

It will be understood that the embodiments illustrated above show applications of the invention only for the purposes of illustration. In practice the invention may be applied to many different configurations, the detailed embodiments being straightforward for those skilled in the art to implement.

For example, although in the above examples, the vibration signals are described as being processed by a processor, it will be understood that the wind turbines existing sensor system controller may be updated to perform this processing. For instance, the existing vibration processing used to identify bearing faults may be updated to identify periodic signal components associated with potential stator wedge faults.

## Claims

1. A method for early fault detection in a wind turbine generator, the method comprising:
receiving a vibration signal produced by the generator;
identifying in the vibration signal a periodic signal component related to the number of rotor bars of a rotor of the generator; and,
identifying a potential fault in the stator of the generator based at least in part on a change in characteristic of the periodic signal component over time.

2. A method according to any preceding claim, wherein the change in characteristic comprises an increase in an amplitude of the periodic signal component.

3. A method according to any preceding claim, wherein the change in characteristic comprises an increase in the amplitude relative to other signal components in the vibration signal.

4. A method according to any of claims 1 or 2, wherein the change in characteristic comprises the amplitude of the periodic signal component reaching a threshold amplitude.

5. A method according to any preceding claim, wherein the periodic signal component has a plurality of harmonic sub-components.

6. A method according to any preceding claim, wherein identifying the periodic signal component further comprises applying a frequency domain transform function to the vibration signal and identifying the periodic signal within the transformed vibration signal.

7. An early fault detection system for a wind turbine generator, comprising:
a vibration sensor for receiving a vibration signal produced by the generator;
an early fault detection module configured to identify in the vibration signal a periodic signal component related to the number of rotor bars of a rotor of the generator, and identify a potential fault in the stator of the generator based at least in part on a change in characteristic of the periodic signal.

8. A system according to claim 7 wherein the change in characteristic comprises an increase in an amplitude of the periodic signal component.

9. A system according to claim 7 or 8, wherein the change in characteristic comprises an increase in the amplitude relative to other periodic signal components in the vibration signal.

10. A system according to any of claims 7 or 8, wherein the change in characteristic comprises the amplitude of the periodic signal component reaching a threshold amplitude.

11. A system according to any of claims 7 to 10, wherein the periodic signal component has a plurality of harmonic sub-components.

12. A system according to any of claims 7 to 11, wherein identifying the periodic signal component further comprises applying a frequency domain transform function to the vibration signal and identifying the periodic signal within the transformed vibration signal.

13. A system according to any of claims 7 to 12 wherein the vibration sensor is mounted outside a housing of the generator.

14. A sensor for an early fault detection system in a wind turbine generator, comprising:
a receiver for receiving an vibration signal produced by the generator; and
a processor configured to identify in the vibration signal a periodic signal component related to the number of rotor bars of a rotor of the generator, and identify a potential fault in the stator of the generator based at least in part on a change in characteristic of the periodic signal.

15. A sensor according to claim 14 wherein the sensor is further configured to carry out the method according to any of claims 1 to 6.
